# EUROPÄISCHE PATENTSCHRIFT

(11) **EP 3 347 200 B1**
(45) Veröffentlichungstag und Bekanntmachung des Hinweises auf die Patenterteilung: **21.08.2019**
(21) Anmeldenummer: 16800894.4
(22) Anmeldetag: 02.11.2016
(51) Int. Cl.: B32B 18/00, C23C 28/00, F01D 5/28

(54) **TURBINENSCHAUFEL MIT EINER LOKALEN, ZWEILAGIGEN WÄRMEDÄMMSCHICHT**
TURBINE BLADE WITH A LOCALLY BI-LAYERED THERMAL BARRIER COATING
AUBE DE TURBINE AVEC UNE BARRIÈRE THERMIQUE DOUBLE COUCHE LOCALE

(30) Priorität: 27.11.2015 DE 102015223576
(43) Veröffentlichungstag der Anmeldung: 18.07.2018
(73) Patentinhaber: Siemens Aktiengesellschaft, 80333 München (DE)
(72) Erfinder: AHMAD, Fathi, 41564 Kaarst (DE); KOCH, Daniela, 10439 Berlin (DE); RADULOVIC, Radan, 44799 Bochum (DE)
(86) Internationale Anmeldenummer: PCT/EP2016/076361
(87) Internationale Veröffentlichungsnummer: WO 2017/089082

(56) Entgegenhaltungen:
- EP-A1- 2 236 648
- WO-A1-2014/108199
- DE-T5-112008 003 399
- N Asok Kumar ET AL: "Numerical simulation of steady state heat transfer in a ceramic-coated gas turbine blade", International Journal of Heat and Mass Transfer, 1. Januar 2002 (2002-01-01), Seiten 4831-4845, XP055334651, DOI: 10.1016/S0017-9310(02)00190-4 Gefunden im Internet: URL:http://www.sciencedirect.com/science/a rticle/pii/S0017931002001904/pdfft?md5=6c1 30c84bcfeb4a19c08723762e76e30&pid=1-s2.0-S 0017931002001904-main.pdf

## Beschreibung

Die Erfindung betrifft eine Turbinenschaufel mit einem Wärmedämmschichtsystem mit einer Wärmedämmschicht, wobei in einem hochbelasteten Bereich lokal eine zweilagige Wärmedämmschicht aufgebracht wird.

Keramische Wärmedämmschichten (TBC) werden genutzt, um Bauteile für den Einsatz bei hohen Temperaturen vor Wärmeeintrag zu schützen. Dies ist bei Turbinenschaufeln der Fall. So ist es beispielsweise aus der EP 2 845 924 A1 bekannt, Schichtsysteme aus einer ersten keramischen Schicht aus voll- oder teilstabilisiertem Zirkoniumoxid und darauf einer Schicht, die eine Pyrochlorstruktur aufweist, wie Gadoliniumzirkonat, zu verwenden.

Aufgrund höherer thermischer Belastungen bei Turbinenschaufeln einer Turbine kommt es zu lokalen Temperaturerhöhungen im Druckbereich der Turbinenschaufel. Dies führt zu stärkerem Verbrauch der metallischen Schutzschicht oder zur Abplatzung der TBC.

Die Verwendung von Kühlluftbohrungen würde zum Verbrauch von Kompressorluft und damit zur Reduzierung des Wirkungsgrades führen.

EP 2 236 648 A1 beschreibt ein Verfahren zum Reparieren von mit TBC beschichteten Gasturbinenschaufeln und offenbart das lokale Aufbringen eines "TBC-Patchs" über einer existierenden TBC, um sie lokal zu schützen, aber erwähnt weder einen präzisen Ort noch die Dimensionen der lokalen Verstärkung.

Ohne Gegenmaßnahmen würde sich die maximale Laufzeit der Turbine reduzieren.

Es ist daher Aufgabe der Erfindung oben genanntes Problem zu lösen.

Die Aufgabe wird gelöst durch eine Turbinenschaufel gemäß Anspruch 1.

Es zeigen
- Figur 1: ein Bauteil mit einem Schichtsystem und
- Figuren 2 bis 5: verschiedene Ansichten der erfindungsgemäßen Ausgestaltung.

Die Figuren und die Beschreibung stellen nur Ausführungsbeispiele der Erfindung dar.

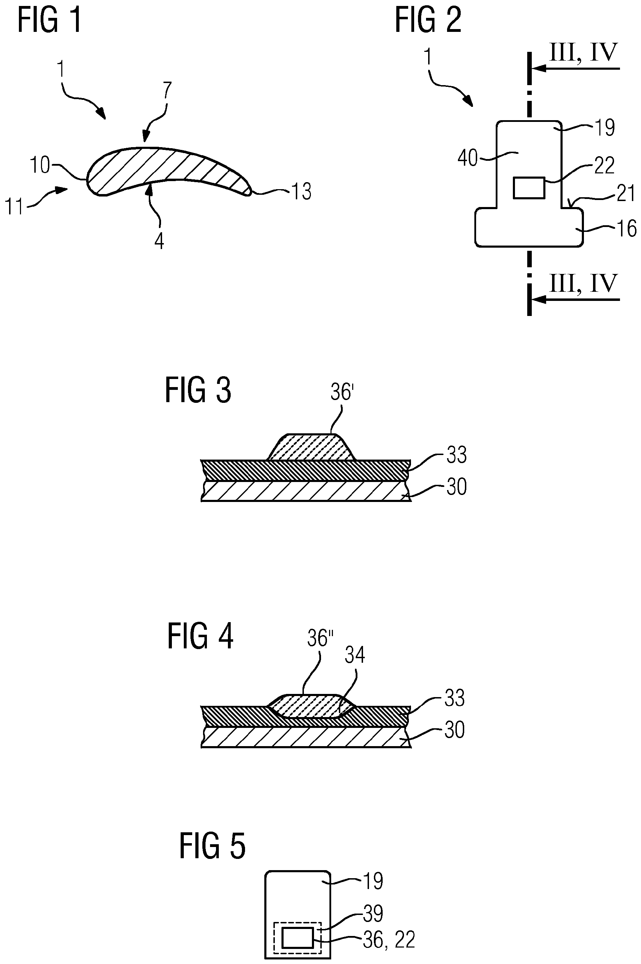

In Figur 1 ist ein Querschnitt durch ein Schaufelblatt einer Turbinenschaufel 1 gezeigt.

Es gibt eine Saugseite 7 und eine Druckseite 4, wobei die Turbinenschaufel 1 von Heißgas an eine Einströmkante 10 angeströmt wird und eine Abströmkante 13 aufweist.

Im Fall der Turbinenschaufel 1 gibt es einen hochbelasteten Bereich 22 im Bereich der Druckseite 4.

Die Turbinenschaufel 1 wird von einem Heißgas in Strömungsrichtung 11 umströmt.

In Figur 2 ist eine Draufsicht auf eine Turbinenschaufel 1 gezeigt, die ein Schaufelblatt 19 und einen Befestigungsbereich 16, hier vereinfacht dargestellt, aufweist.

In einem lokalen Bereich 22 ist eine erhöhte thermische Belastung gegeben. In diesem Bereich gibt es dann eine lokale Verstärkung 36, 36', 36" (Fig. 3, 4, 5).

Die lokale Verstärkung 36, 36', 36" ist nahe einer Plattform 21 angeordnet und kann sich vorzugsweise mit einem Übergangsbereich 39 (Fig. 5) über die gesamte Druckseite 4 in Strömungsrichtung 11 erstrecken. In radialer Richtung dazu, also in Richtung 40, ist die Ausdehnung höchstens 30%. Bei einer Turbinenschaufel 1 bezieht sich diese Angabe vorzugsweise nur auf das Schaufelblatt 19.

Um dieser erhöhten thermischen Belastung gerecht zu werden, wird lokal die Dicke der Wärmedämmschicht erhöht.

In Figur 3 und 4 sind Querschnitte gemäß der erfindungsgemäßen Ausgestaltung gezeigt.

Die Erhöhung der Schichtdicke erfolgt nicht durch ein verstärktes Auftragen desselben Materials der umliegenden Schicht 33, sondern es wird lokal ein zweites, von dem ersten Material verschiedenes Material aufgetragen.

Die erste keramische Schicht 33 ist auf dem Schaufelblatt 19 und der Schaufelplattform 21 einer Turbinenschaufel 1 angeordnet.

Vorzugsweise ist die Wärmedämmschicht 33 auf der Turbinenschaufel 1 eine Zirkon-basierte, insbesondere teilstabilisierte Zirkonoxidschicht und die verstärkte TBC wird durch lokales Aufbringen einer Pyrochlorschicht 36, 36', 36", insbesondere Gadoliniumzirkonat-basiert erreicht.

Das Material der lokalen Verstärkung 36, 36', 36" ist vorzugsweise auch vollstabilisiertes Zirkonoxid.

Das Material der lokalen Verstärkung 36, 36', 36" ist vorzugsweise mindestens 10%, insbesondere 20% poröser ausgestaltet als die erste keramische Schicht 33.

Insbesondere weist sie 36, 36', 36" ebenfalls teilstabilisiertes Zirkonoxid auf wie die erste keramische Schicht 33.

Dabei ist, wie in Figur 3 dargestellt, das zweite Material der lokalen Verstärkung 36, 36', 36" auf die unterliegende keramische Schicht 33 aufgebracht werden, das heißt, die Schichtdicke der Wärmedämmschicht 33 unterhalb der Verstärkung 36' ist genauso dick wie um die lokale Verstärkung 36' herum.

Ebenso wäre es möglich, aber nicht angesprochen, im Bereich der lokalen Verstärkung 36" die unterliegende Wärmedämmschicht 33 etwas dünner auszugestalten, so dass eine Mulde 34 vorhanden ist, in der das andere Material lokal aufgetragen wird und zwar so aufgetragen wird, dass eine Verdickung gegeben ist (Fig. 4).

Die erste keramische Schicht 33 hat vorzugsweise eine Dicke von 350µm - 500µm.

Die lokale Verstärkung 36, 36', 36" hat vorzugsweise eine Dicke von bis zu 300µm, insbesondere bis zu 250µm. Vorzugsweise ist die lokale Verstärkung 36, 36', 36" mindestens zwischen 10%, insbesondere mindestens 30% dünner als die erste keramische Schicht 33.

In Figur 5 ist nur eine Draufsicht auf den Schaufelblattbereich 19 des Bauteils 1 dargestellt.

Zwischen dem Bereich, der nur die erste Wärmedämmschicht 33 aufweist und der lokalen Verstärkung 36, 36', 36" (Fig. 3, 4) kann noch ein Übergangsbereich 39 vorhanden sein, der einen Gradienten in der Zusammensetzung der ersten keramischen Schicht 33 und der lokalen Verstärkung 36', 36" aufweist.

Der Übergangsbereich 39 stellt ebenfalls eine lokale Fläche dar.

## Patentansprüche

1. Turbinenschaufel mit einem keramischen Wärmedämmschichtsystem, zumindest aufweisend:
ein als Schaufelplattform und als ein Schaufelblatt ausgestaltetes Substrat (30),
optional eine metallische Haftvermittlerschicht auf dem Substrat (30),
wobei auf dem Substrat (30)
oder optional auf der metallischen Haftvermittlerschicht eine erste keramische Schicht (33) als Wärmedämmschicht vorhanden ist, die das Substrat (30) größtenteils oder vollständig im ausgesetzten Hochtemperaturbereich schützt und
dass lokal eine Erhöhung (36, 36', 36") der Wärmedämmschicht zur lokalen Verstärkung der Wärmedämmung gegeben ist,
wobei die Erhöhung (36, 36', 36") ein von dem Material der ersten keramischen Schicht (33) verschiedenes Material aufweist,
wobei die lokale Verstärkung (36') über der ersten keramischen Schicht (33) angeordnet ist, ohne dass die erste keramische Schicht (33) eine verringerte Schichtdicke aufweist,
**dadurch gekennzeichnet,**
**dass** die lokale Verstärkung (36, 36', 36") höchstens auf 30% der Fläche der Wärmedämmschicht vorgesehen ist und
**dass** die lokale Verstärkung (36, 36', 36'') nahe einer Plattform (21) in Strömungsrichtung (11) über die gesamte Druckseite (4) erstreckend angeordnet ist und mit einer Ausdehnung dazu, welche in radialer Richtung des Schaufelblatts höchstens 30% beträgt.

2. Turbinenschaufel nach Anspruch 1,
bei der das Material der ersten keramischen Schicht (33) Zirkonoxid,
insbesondere teilstabilisiertes Zirkonoxid aufweist.

3. Turbinenschaufel nach einem oder beiden der Ansprüche 1 oder 2,
bei der das Material der lokalen Verstärkung (36, 36', 36") ein Pyrochlor aufweist,
insbesondere Gadoliniumzirkonat aufweist.

4. Turbinenschaufel nach einem oder beiden der Ansprüche 1 bis 2,
bei der das Material der lokalen Verstärkung (36, 36', 36'') vollstabilisiertes Zirkonoxid aufweist.

5. Turbinenschaufel nach einem oder mehreren der Ansprüche 1 bis 4,
bei der das Material der lokalen Verstärkung (36, 36', 36") mindestens 10%,
insbesondere 20% poröser ist als die der ersten keramischen Schicht (33),
insbesondere ebenfalls teilstabilisiertes Zirkonoxid aufweist.

6. Turbinenschaufel nach einem oder mehreren der vorherigen Ansprüche 1 bis 5,
bei der zwischen der lokalen Verstärkung (36, 36', 36'') und der umgebenden ersten keramischen Schicht (33) ein Übergangsbereich (39) in der Zusammensetzung vorhanden ist.

7. Turbinenschaufel nach einem oder mehreren der vorherigen Ansprüche,
bei der die lokale Verstärkung (36, 36', 36") mindestens 10%,
insbesondere mindestens 30% dünner ausgestaltet ist als die unterliegende erste keramische Schicht (33) in diesem Bereich der lokalen Verstärkung (36, 36', 36").

8. Turbinenschaufel nach einem oder mehreren der vorherigen Ansprüche,
bei der die erste keramische Schicht (33) eine Dicke von 350µm bis 500µm aufweist und/oder
die lokale Verstärkung (36, 36', 36") eine Dicke von bis zu 300µm,
insbesondere bis zu 250µm aufweist.

## Claims

1. Turbine blade with a ceramic thermal barrier coating system,
at least comprising:
a substrate (30) designed as a blade platform and as a blade airfoil,
optionally a metallic bond coat on the substrate (30),
wherein on the substrate (30)
or optionally on the metallic bond coat there is a first ceramic layer (33) as a thermal barrier coating, which protects the substrate (30) for the most part or completely in the exposed high temperature region and
that there is locally an increase (36, 36', 36") of the thermal barrier coating for locally reinforcing the thermal barrier,
wherein the increase (36, 36', 36") comprises a material that is different from the material of the first ceramic layer (33),
wherein the local reinforcement (36') is arranged over the first ceramic layer (33), without the first ceramic layer (33) having a reduced layer thickness,
**characterized**
**in that** the local reinforcement (36, 36', 36") is provided at most on 30% of the area of the thermal barrier coating and
**in that** the local reinforcement (36, 36', 36") is arranged close to a platform (21) extending over the entire pressure side (4) in the direction of flow (11) and with an extent thereto which in the radial direction of the blade airfoil is at most 30%.

2. Turbine blade according to Claim 1,
in which the material of the first ceramic layer (33) comprises zirconia,
in particular partly stabilized zirconia.

3. Turbine blade according to either or both of Claims 1 and 2,
in which the material of the local reinforcement (36, 36', 36") comprises a pyrochlore,
in particular comprises gadolinium zirconate.

4. Turbine blade according to either or both of Claims 1 and 2,
in which the material of the local reinforcement (36, 36', 36") comprises fully stabilized zirconia.

5. Turbine blade according to one or more of Claims 1 to 4, in which the material of the local reinforcement (36, 36', 36") is at least 10%,
in particular 20%, more porous than that of the first ceramic layer (33),
in particular likewise comprises partly stabilized zirconia.

6. Turbine blade according to one or more of the preceding Claims 1 to 5,
in which a transitional region (39) in the composition is present between the local reinforcement (36, 36', 36") and the surrounding first ceramic layer (33).

7. Turbine blade according to one or more of the preceding claims,
in which the local reinforcement (36, 36', 36") is made at least 10%,
in particular at least 30%, thinner than the underlying first ceramic layer (33) in this region of the local reinforcement (36, 36', 36").

8. Turbine blade according to one or more of the preceding claims,
in which the first ceramic layer (33) has a thickness of 350 µm to 500 µm and/or
the local reinforcement (36, 36', 36") has a thickness of up to 300 µm,
in particular up to 250 µm.

## Revendications

1. Aube de turbine ayant un système stratifié calorifuge en céramique,
comportant au moins :
un substrat (30), conformé en plateforme d'aube et en corps d'aube,
éventuellement une couche d'agent adhésif métallique sur le substrat (30),
dans laquelle il y a, sur le substrat (30)
ou éventuellement sur la couche d'agent adhésif métallique, une première couche (33) en céramique, comme couche calorifuge, qui protège le substrat (30), pour la plus grande partie ou complètement, dans la plage de haute température à laquelle il est soumis et
en ce qu'il y a localement une surélévation (36, 36', 36") de la couche calorifuge pour renforcer localement le calorifugeage,
dans laquelle la surélévation (36, 36', 36") a un matériau différent du matériau de la première couche (33) en céramique,
dans laquelle le renfort (36') local est disposé au dessus de la première couche (33) en céramique, sans que la première couche (33) en céramique ait une épaisseur diminuée,
**caractérisée**
**en ce que** le renfort (36, 36', 36") local est prévu au plus sur 30% de la surface de la couche calorifuge et en ce que le renfort (36, 36', 36") local est disposé en s'étendant près d'une plateforme (21) dans la direction (11) d'écoulement sur tout l'intrados (4) et en ayant une étendue, qui représente au plus 30% dans la direction radiale du corps de l'aube.

2. Aube de turbine suivant la revendication 1,
dans laquelle le matériau de la première couche (33) en céramique a de l'oxyde de zirconium,
notamment de l'oxyde de zirconium stabilisé partiellement.

3. Aube de turbine suivant l'une ou les deux des revendications 1 ou 2,
dans laquelle le matériau du renfort (36, 36', 36") local a un pyrochlore,
en ayant notamment du zirconate de gadolinium.

4. Aube de turbine suivant l'une ou les deux des revendications 1 à 2,
dans laquelle le matériau du renfort (36, 36', 36") local a de l'oxyde de zirconium stabilisé complètement.

5. Aube de turbine suivant l'une ou plusieurs des revendications 1 à 4,
dans laquelle le matériau du renfort (36, 36', 36") local est plus poreux d'au moins 10%,
notamment de 20%, que la première couche (33) en céramique, en ayant notamment également de l'oxyde de zirconium stabilisé partiellement.

6. Aube de turbine suivant l'une ou plusieurs des revendications 1 à 5 précédentes,
dans laquelle il y a dans la composition une région (39) de transition entre le renfort (36, 36', 36") local et la première couche (33) en céramique environnante.

7. Aube de turbine suivant l'une ou plusieurs des revendications précédentes,
dans laquelle le renfort (36, 36', 36") local est plus mince d'au moins 10%,
notamment d'au moins 30%, que la première couche (33) en céramique sous-jacente dans cette région du renfort (36, 36', 36") local.

8. Aube de turbine suivant l'une ou plusieurs des revendications précédentes,
dans laquelle la première couche (33) en céramique a une épaisseur allant de 350µm à 500µm et/ou
le renfort (36, 36', 36'') local a une épaisseur allant de à 300 µm,
en allant notamment jusqu'à 50µm.
